# EUROPEAN PATENT SPECIFICATION

(11) **EP 2 165 863 B1**
(45) Date of publication and mention of the grant of the patent: **18.04.2012**
(21) Application number: 09011874.6
(22) Date of filing: 17.09.2009
(51) Int. Cl.: B60G 15/06, F16F 9/20, F16F 9/32

(54) **Hydraulic damper**
Hydraulischer Dämpfer
Amortisseur hydraulique

(30) Priority: 22.09.2008 JP 2008242483
(43) Date of publication of application: 24.03.2010
(73) Proprietor: Yamaha Hatsudoki Kabushiki Kaisha, Iwata-shi, Shizuoka 438-8501 (JP)
(72) Inventor: Yamazaki, Yutaka, Iwata-shi Shizuoka-ken 438-8501 (JP); Sawai, Seiji, Iwata-shi Shizuoka-ken 438-8501 (JP)
(74) Representative: Zimmermann, Tankred Klaus

(56) References cited:
- EP-A1- 1 970 593
- WO-A1-2007/052581
- WO-A1-2007/116273
- DE-A1- 2 453 986
- US-A- 3 151 856
- US-A- 3 870 287
- US-A- 4 099 602

## Description

### BACKGROUND OF THE INVENTION

### 1. Field of the Invention

The present invention relates to a hydraulic damper, and more specifically to a double-rod type or through-rod type hydraulic damper which has a main piston rod and an auxiliary piston rod which extend from a piston in axially opposite directions from each other.

### 2. Description of the Related Art

Hydraulic dampers for application to suspension systems and car body vibration dampers in automobiles, for example, are grouped into two categories, namely, a single-rod type which has a single piston rod extending axially from a piston, and a double-rod type which has a main piston rod and an auxiliary piston rod extending from a piston in axially opposite directions from each other.

As shown in JP-A 2004-232845, for example, a single-rod type hydraulic damper includes a cylindrical tube having both its ends closed and filled with hydraulic fluid; a piston fitted so as to be axially slidable inside the cylindrical tube; a single piston rod extending axially from the piston; high-pressure gas which keeps the hydraulic fluid under a pressurized state to protect the hydraulic fluid from cavitation; and a damping force generator which generates a damping force by allowing the hydraulic fluid to move between a first oil chamber and a second oil chamber which are formed by partitioning an inside space of the cylindrical tube with the piston.

In the single-rod type damper, the area of a pressure receiving surface on one end of the piston is not equal to the area of a pressure receiving surface on the other end of the piston. Therefore, when the hydraulic fluid is under a constant pressurization by the high-pressure gas, the pressure from the hydraulic fluid and the area difference in the two pressure receiving surfaces cause an "urging force", which constantly urges the piston toward the side provided with the piston rod. Thus, the single-rod type dampers have a "characteristic" that they are always enabled to stretch in their free state.

However, the amount of urging force is significantly influenced by the amount of pressurizing force which is applied for cavitation prevention as well as by the size of the piston rod diameter. In other words, it is difficult to achieve a good balance between an appropriate urging force, an appropriate pressurizing force for cavitation prevention, an appropriate piston rod diameter which can meet or exceed a required strength, and so on.

Double-rod type dampers have been proposed in an attempt to eliminate these problems in the single-rod type dampers.

As disclosed in WO 2007/052581, for example, a double-rod type hydraulic damper includes a fixed rod guide which closes an opening at an end of a cylindrical tube; a rod guide which is fitted into the cylindrical tube, on a side closer to the other end of the cylindrical tube; a piston fitted axially slidably in an axially intermediate portion of the cylindrical tube; a main piston rod extending from the piston and penetrating the fixed rod guide; an auxiliary piston rod extending from the piston and penetrating the other rod guide; a solid spring which constantly pressurizes hydraulic fluid filled inside the cylindrical tube; and damping force generators which generate a damping force by allowing the hydraulic fluid to flow between a first oil chamber and a second oil chamber, which are formed by partitioning an inside space of the cylindrical tube with the piston.

When the above-described damper is utilized for a suspension system in an automobile, either one of the cylindrical tube and the main piston rod is connected with a portion on the car-body side of the automobile via a rubber mount whereas the other one is connected with a portion on the wheel side. Thus, the damper is bridged between the car-body side and the wheel side. When the automobile is driven, the damper buffers impact forces just as the single-rod type damper does.

In the double-rod type damper, the main piston rod and the auxiliary piston rod have the same diameter in order to eliminate the above-described problems in the single-rod type dampers. Therefore, the areas of the two pressure receiving surfaces on the respective two end surfaces of the piston are equal to each other, and for this reason, the double-rod type damper has no "urging force" unlike the single-rod type dampers, and thus the double-rod type damper does not have the "characteristic" that they are always experiencing an urge to extend in their free state.

### SUMMARY OF THE INVENTION

The inventor of the preferred embodiments of the present invention described and claimed in the present application conducted an extensive study and research regarding a double-rod type damper, such as the one described above, and in doing so, discovered and first recognized new unique challenges and problems as described in greater detail below.

As has been described above, since the double-rod type damper does not have the "characteristic" that it is always experiencing an urge to extend in its free state, there is no initial load acting on the rubber mount which connects the damper with the automobile. When there is an impact force from the road-surface side while the automobile is driven, the damper performs a compressing action thereby buffering the impact force. In this process, if there is no initial load acting on the rubber mount, the damper' s compressing action starts, in a strict sense, only after the rubber mount has been compressed and comes under a certain load. This means that when there is an impact force acting on the car-body side, there is always a delay in the compressing action of the damper, and accordingly there is a problem of decreased response in the impact force buffering action performed by the damper.

In order to solve this problem, there is a proposal as disclosed in WO 2004/065817, for example, that a spring is inserted inside the cylindrical tube of the hydraulic damper so that the spring applies a small "urging force" to the piston. This arrangement makes it possible to provide the damper with a desirable, appropriate "characteristic" that the damper is always experiencing an urge to extend or compress in its free sate. As a result, it becomes possible to apply an appropriate initial load to the rubber mount at the location of connection, and thereby to prevent a decrease in the response.

However, insertion of a spring into the cylindrical tube results in an increase in the number of components in the damper. Also, there is a desired stroke for the piston inside the cylindrical tube, and insertion of the spring causes the length of the cylindrical tube to be increased accordingly, by an amount of axial space to be occupied by the spring. Thus, the insertion of a spring results in a problem of a complicated construction of the damper.

Thus far, the description has covered a case where hydraulic dampers are utilized in the suspension system for the automobile. The same discussion is also true when the hydraulic dampers are utilized as car-body vibration dampers. The car-body vibration damper is a device which is bridged between two portions of a car body of an automobile for suppressing small vibrations (for example, vibrations of a stroke not longer than about 1 mm) which is developing between the two portions of the car body. Examples of the two portions are two support points used for pivotally supporting wheel suspension arms near the car body; right and left suspension towers in an engine room in the car body; and mutually opposing right and left walls in a rear trunk room.

The car-body vibration dampers are fixed directly to the car body without using rubber mounts. Since the car-body vibration dampers are aimed at damping small vibrations of a stroke not longer than about 1 mm, even a small amount of deformation in the car body to which the damper is installed leads to decreased response in the damper's vibration damping action. If a double-rod type damper, which does not have the "characteristic" of experiencing a constant urge to extend, is used as the car-body vibration dampers, no initial load acts on the above-described two portions of the car body. Hence, when there is an impact force coming from the car body side, deformation occurs first in the car body where the damper is installed, and the damper's compressing action starts only after the load has reached a certain level. This means a delay in the damper's compressing action and a decrease in the response accordingly, in the vibration damping action by the damper.

In order to overcome the previously unrecognized and unsolved problems described above, a preferred embodiment of the present invention provides a hydraulic damper which has a simple configuration and is capable of increasing the response thereof.

According to the present invention, a hydraulic damper includes a cylindrical tube; a first rod guide fitted into the cylindrical tube, on a side closer to an end of the cylindrical tube; a second rod guide fitted into the cylindrical tube, on a side closer to another end of the cylindrical tube than is the first rod guide; a piston fitted into the cylindrical tube so as to be axially slidable therein between the first rod guide and the second rod guide, partitioning a space between the first rod guide and the second rod guide into a first oil chamber and a second oil chamber; a main piston rod extending from the piston and penetrating the first rod guide; an auxiliary piston rod extending from the piston and penetrating the second rod guide; a pressurizer arranged to pressurize a hydraulic fluid filled in the first oil chamber and the second oil chamber; and a damping force generator arranged to generate a damping force by allowing the hydraulic fluid to flow between the first oil chamber and the second oil chamber. In the hydraulic damper, a diameter of the main piston rod and a diameter of the auxiliary piston rod are different from each other.

In a preferred embodiment of the present invention, the hydraulic fluid is pressurized preferably by the pressurizer. Also, since the main piston rod and the auxiliary piston rod which extend from the piston have different diameters from each other, pressure receiving surfaces, which receive the pressure of the hydraulic fluid, on the two axial end surfaces of the piston have different areas from each other. Therefore, based on the pressure of the hydraulic fluid and the area difference between the two pressure receiving surfaces, a positive or a negative "urging force" is generated and urges the piston in one of two axial directions of the cylindrical tube. This gives the damper the "characteristic" that it is always enabled to stretch or compress in its free state. Now, assume an object such as an automobile, and a case where two portions of the object are connected with each other using the damper, i.e. , the damper is bridged in the object in order to buffer impact forces to which the object is exposed. In this case, the damper is enabled to perform a stretching action or a compressing action due to the "characteristic", whereby an initial load is applied to the connection portions between the obj ect and the damper. As a result, when an impact force is applied to the object, the impact force is immediately responded to by the damper since a rubber mount or portion itself of the car body, for example, has already undergone its initial deformation due to the initial load. Thus, the impact force which is applied to the object is buffered by the damper very quickly and highly responsively. The above-described advantage is obtained from a simple constitution that the main piston rod diameter and the auxiliary piston rod diameter are differentiated from each other, without any need for adding extra components such as a spring.

Preferably, the diameter of the main piston rod is greater than the diameter of the auxiliary piston rod. In this case, the area of pressure receiving surface in the end surface of the piston where the main piston rod extends is smaller than the area of pressure receiving surface in the end surface where the auxiliary piston rod extends, according to the amount by which the main piston rod diameter is greater than the auxiliary piston rod diameter. Therefore, the piston is urged toward the side provided with the main piston rod by the "urging force" which is based on the pressure from the hydraulic fluid and the area difference between the two pressure receiving surfaces. This gives the damper the "characteristic" that it is always enabled to stretch in its free state, and therefore the damper can be suitably applied to equipment which requires such a "characteristic".

For example, assume a case where the damper is applied to a suspension system in an automobile. The damper is bridged, for example, between the car-body side and the wheel side, i.e., the car body and the wheel are connected with each other via the damper. Typically, when the automobile is driven, a large impact force is repeatedly applied from the road-surface side toward the car body. Upon the occurrence of each impact force, the damper performs a compressing action and buffers the impact force. In this case, since the damper has the "characteristic" that it is always enabled to stretch in its free state, the connection portions between the damper and the automobile are under an initial load already in their resting state. For example, a rubber mount has already undergone its initial deformation (stretching). Therefore, when an impact force is applied from the road-surface side toward the car body, the damper immediately performs a compressing action. As a result, the impact force which is applied toward the car body is quickly buffered by the damper highly responsively.

Also, assume a case where two portions on the car body which are prone to car body vibrations caused by external compressive forces, e.g., right and left suspension towers in the automobile car body, are connected with each other by the damper. In this case, small vibrations which are caused by impact forces applied from the road surface-side to the car body are also buffered highly responsively using the same working principle as described above, and therefore, it is possible to provide a comfortable ride.

Further preferably, the diameter of the auxiliary piston rod is greater than the diameter of the main piston rod. In this case, the area of the pressure receiving surface in the end surface of the piston where the auxiliary piston rod extends is smaller than the area of the pressure receiving surface in the end surface where the main piston rod extends, according to the amount by which the auxiliary piston rod diameter is greater than the main piston rod diameter. Therefore, the piston is urged toward the side provided with the auxiliary piston rod by the "urging force" which is based on the pressure from the hydraulic fluid and the area difference between the two pressure receiving surfaces. This gives the damper the "characteristic" that it is always enabled to compress in its free state, and therefore the damper can be suitably applied to equipment which requires such a "characteristic".

For example, assume a case where the damper is applied to a suspension system in an automobile. Since the damper has the "characteristic" that it is always enabled to compress in its free state, the portions of connection between the damper and the automobile are under an initial load already in their resting state. For example, a rubber mount has already undergone its initial deformation (compression). Therefore, in a sharp curve when the car body starts to tilt rapidly in the radially outward direction with respect to the automobile's turning direction, the damper on the radially inward side immediately starts a stretching action, thereby generating a damping force highly responsively, making it possible to suppress a floating movement of the car body which is developing on the radially inward side of the automobile's turning direction. On the other hand, on the radially outward side of the automobile's turning direction, the rubber mount is stretched by the amount of the initial deformation (compression), and then undergoes deformation (stretching), making it easy for the car body to perform a sinking action on the radially outward side of the automobile's turning direction. As a result, it becomes possible to keep a low roll angle and a low height (attitude) of the car body at the time of turning, making it possible to drive smoothly even in a sharp curve.

Also, assume a case where portions in the automobile car body which are prone to car body vibrations caused by external tensile forces are connected with each other via the damper. In this case, small vibrations occurring in the car body due to relevant impact forces are also buffered highly responsively based on the same working principle as described above and therefore it is possible to provide a comfortable ride.

Further, preferably, the pressurizer preferably includes a solid spring. The solid spring has a spring constant which is not very much affected by temperature changes. Therefore, use of the solid spring in the pressurizer makes it possible to reliably maintain a desirable "characteristic" of the hydraulic damper even if there are temperature changes in the hydraulic damper itself or in the surrounding environment.

Preferably, the pressurizer includes a high pressure gas. Changing the gas pressure is easier than changing the spring constant of the solid spring in a configuration where the pressurizer uses the solid spring. Therefore, it is easy to adjust the "characteristic" of the hydraulic damper to a desired level by changing the pressure of the gas, and use of the pressurizer which includes a highly pressurized gas improves convenience.

The hydraulic dampers as described above are suitably used in vehicles such as automobiles, for example.

The above-described and other elements, features, characteristics, steps, aspects and advantages of the present invention will become clearer from the following detailed description of preferred embodiments of the present invention with reference to the drawings.

### BRIEF DESCRIPTION OF THE DRAWINGS

Fig. 1 is a sectional view of a hydraulic damper according to a preferred embodiment of the present invention.

Fig. 2 is an explanatory plan view of an automobile to which the hydraulic dampers are applied.

Fig. 3 is a sectional view taken in lines III-III in Fig. 2.

Fig. 4 is an enlarged partial sectional view showing a primary portion of the preferred embodiment in Fig. 1.

Fig. 5 is an enlarged partial sectional view showing a primary portion of a hydraulic damper according to another preferred embodiment of the present invention.

Fig. 6 is a sectional view of a hydraulic damper according to still another preferred embodiment of the present invention.

Fig. 7 is an enlarged partial sectional view showing a primary portion of the preferred embodiment in Fig. 6.

Fig. 8 is a sectional view of a hydraulic damper according to still another preferred embodiment of the present invention.

### DETAILED DESCRIPTION OF THE PREFERRED EMBODIMENTS

Hereinafter, preferred embodiments of the present invention will be described with reference to the drawings.

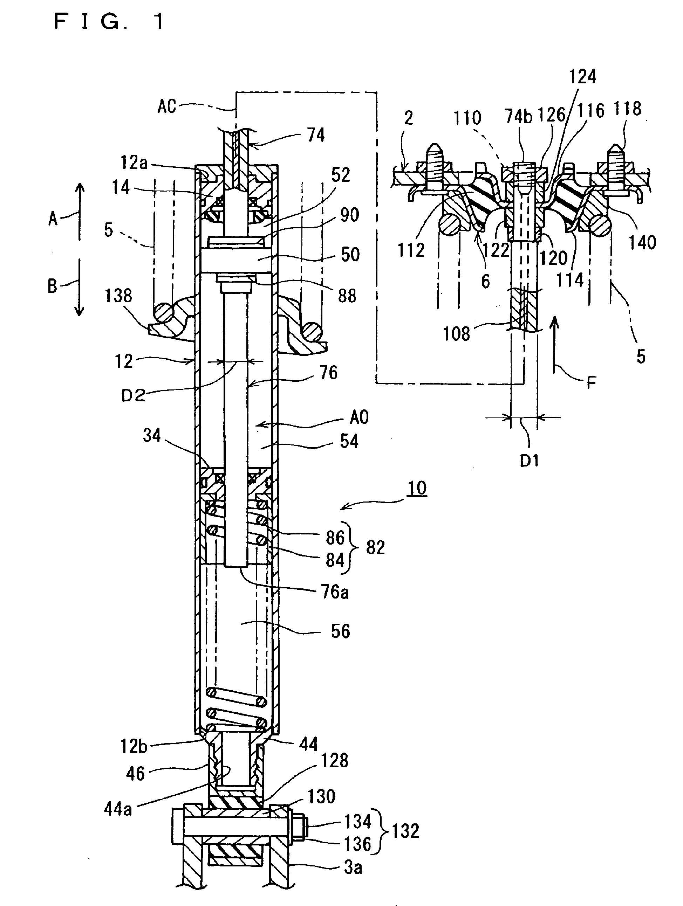

Referring to Fig. 1, a hydraulic damper 10 according to a preferred embodiment of the present invention is a double-rod type damper.

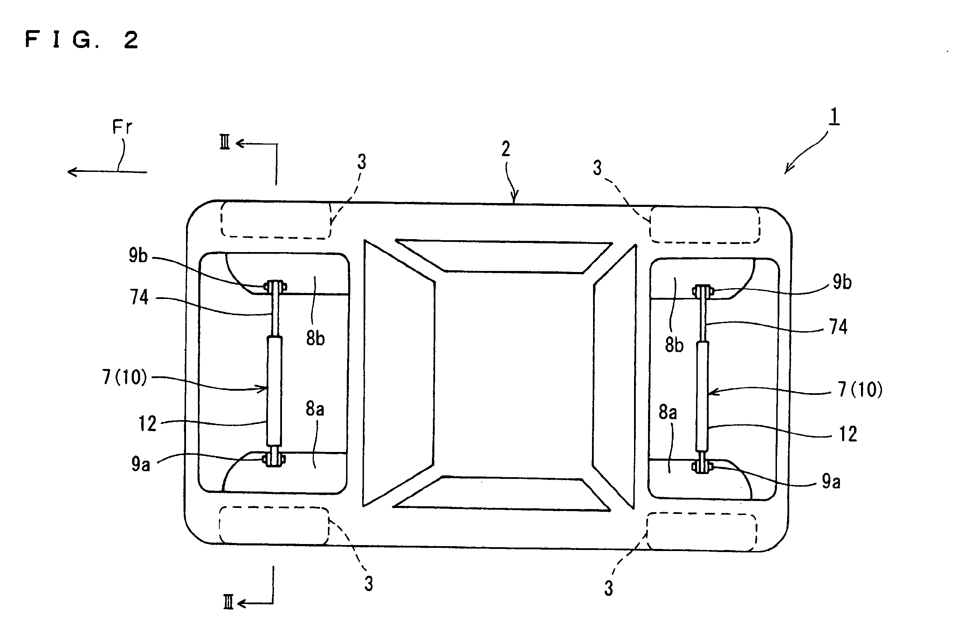

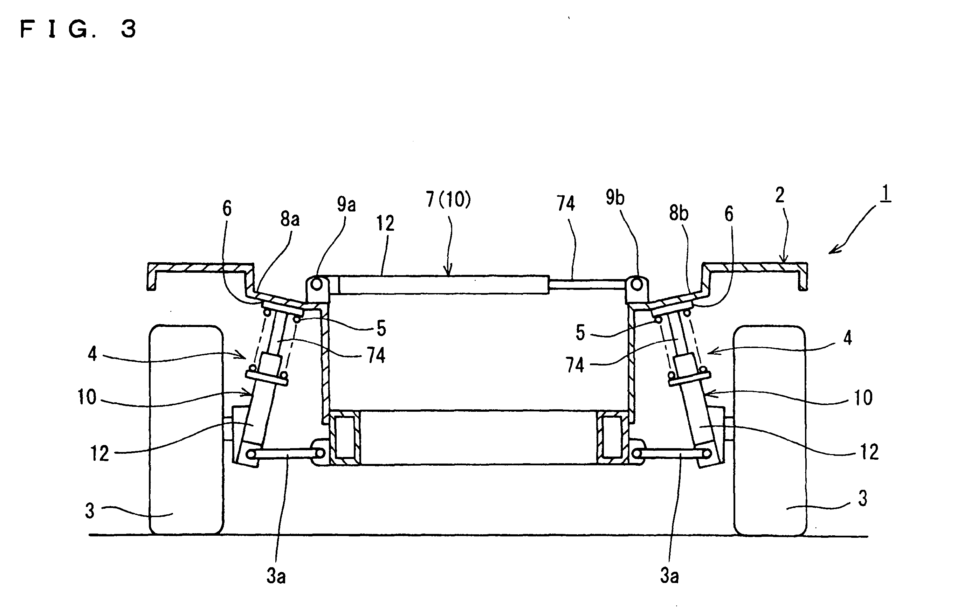

As shown in Fig. 2 and Fig. 3, the hydraulic damper 10 is preferably applied to an automobile 1 as a target object for a damper application. The automobile 1 includes a car body 2; four wheels 3 disposed in front and rear, right and left locations; a wheel suspension arm 3a provided for each of the wheels 3; and a suspension system 4 provided for each wheel suspension arm 3a to be connected with the car body 2. Each suspension system 4 includes the hydraulic damper 10, a suspension spring 5, and a rubber mount 6, and is installed between the car body 2 and one of the wheels 3. It should be noted here that the arrow Fr in Fig. 2 indicates a forward direction in which the automobile 1 moves forward.

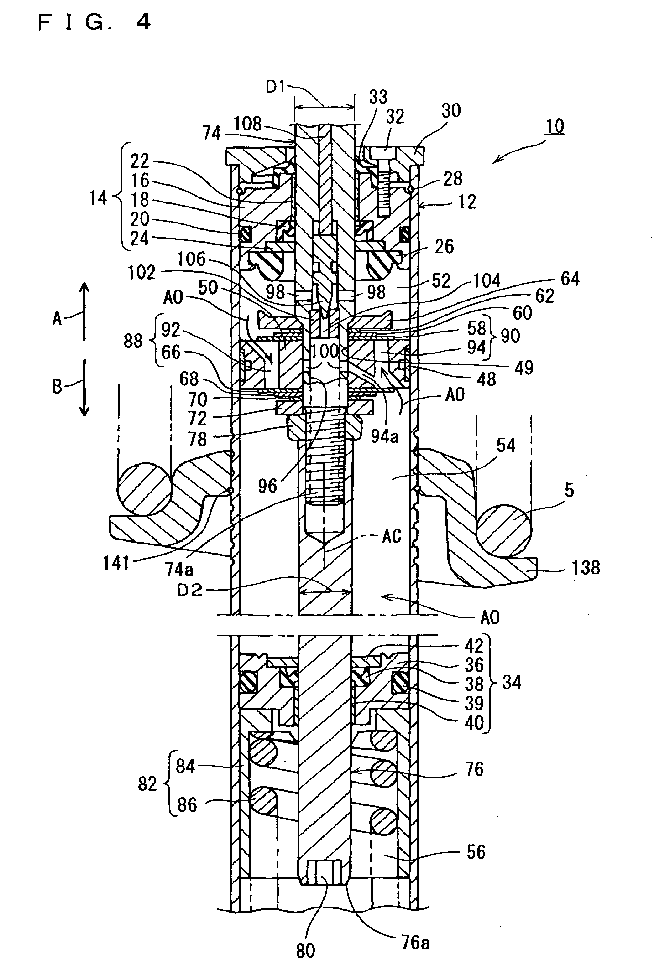

Referring to Fig. 1 and Fig. 4, the hydraulic damper 10 includes a cylindrical tube 12 which has two openings 12a, 12b respectively at its two ends.

Near the opening 12a on an end of the cylindrical tube 12, a first rod guide 14 is fitted. The first rod guide 14 includes a hollow and substantially cylindrical guide main body 16; a sealing member 18 provided by an oil seal, for example; a sealing member 20 provided by an O ring, for example; a bushing 22; and a plate member 24 which preferably is a doughnut-shaped disc. The bushing 22 is provided on the inner circumferential surface of the guide main body 16. The plate member 24 is pressed into a surface of the guide main body 16 facing toward the opening 12b and prevents the sealing member 18 from dropping off. A rubber member 26 is provided on this side of the plate member 24 which faces the opening 12b. The rubber member 26 is contacted by a stopper 64 (to be described later) and thus buffers impact when the hydraulic damper 10 extends to its maximum stroke point. The first rod guide 14 is limited in its movement toward the opening 12a, by a circlip 28, and therefore functions as a fixed rod guide.

A hollow lid member 30 is attached to the opening 12a of the cylindrical tube 12. The lid member 30 is connected with the first rod guide 14 by a screw 32, for example. A sealing member 33 is provided between the lid member 30 and the first rod guide 14.

Inside the cylindrical tube 12, on the side closer to the other end than the first rod guide 14, a second rod guide 34 is fitted to be axially slidable. The second rod guide 34 functions as a movable rod guide. The second rod guide 34 includes a hollow and substantially cylindrical guide main body 36; a sealing member 38 provided by an oil seal, for example; a sealing member 39 provided by an O ring, for example; a bushing 40, and a plate member 42 which preferably is a doughnut-shaped disc. The bushing 40 is provided on the inner circumferential surface of the guide main body 36. The plate member 42 is pressed into a surface of the guide main body 36 facing toward the opening 12a, and prevents the sealing member 38 from dropping off.

On the above-described other end of the cylindrical tube 12, a lid member 44 which has a center through-hole 44a is attached, preferably via welding, to the opening 12b. In Fig. 1, the upper surface of the lid member 44 supports the lower surface of the solid spring 86 (to be described later). A connecting member 46 is threaded around the lid member 44, whereby the through-hole 44a of the lid member 44 is closed. The connecting member 46 connects the cylindrical tube 12 with a portion of the damping target (the wheel suspension arm 3a in the present preferred embodiment).

Between the first rod guide 14 and the second rod guide 34 inside the cylindrical tube 12, a piston 50 which has a piston ring 48 and a hollow portion 49 is fitted to be axially slidable. The piston 50 partitions a space between the first rod guide 14 and the second rod guide 34 inside the cylindrical tube 12 into a first oil chamber 52 and a second oil chamber 54.

The first oil chamber 52 and the second oil chamber 54 are provided in an air-tight space between the first rod guide 14 and the second rod guide 34 inside the cylindrical tube 12. The first oil chamber 52 and the second oil chamber 54 are filled with hydraulic fluid AO. Inside the cylindrical tube 12, there is an air-tight space between the second rod guide 34 and the connecting member 46, which functions as an air chamber 56. The air chamber 56 is filled with air at an atmospheric pressure. It should be noted here that the air chamber 56 may communicate with the atmospheric environment via the through-hole 44a.

The piston 50 has a main surface facing toward the opening 12a, and on this surface there are disposed a compression-side damping valve 58 defined by a leaf spring; a leaf spring 60; a collar 62; and a stopper 64 which are arranged in this order. The damping valve 58, the leaf spring 60, the collar 62 and the stopper 64 are preferably defined by doughnut-shaped discs. Likewise, the piston 50 has a main surface facing toward the opening 12b, and on this surface there are disposed a stretch-side damping valve 66 provided by a leaf spring; a leaf spring 68; and collars 70 and 72 which are arranged in this order. The damping valve 66, the leaf spring 68, the collars 70 and 72 are preferably defined by doughnut-shaped discs.

With the above structure, a main piston rod 74 is provided on a first end side of the piston 50 whereas an auxiliary piston rod 76 is provided on a second end side of the piston 50. The main piston rod 74 penetrates the stopper 64, the collar 62, the leaf spring 60, the damping valve 58, the piston 50, the damping valve 66, the leaf spring 68, and the collars 70, 72. The auxiliary piston rod 76 is threaded around a tip portion 74a of the main piston rod 74 together with a nut 78.

The main piston rod 74 extends from the piston 50 toward the opening 12a on an axis AC of the cylindrical tube 12, passes through the first oil chamber 52, and penetrates the first rod guide 14 slidably via the bushing 22. The auxiliary piston rod 76 extends from the piston 50 on the axis AC of the cylindrical tube 12, passes through the second oil chamber 54, and penetrates the second rod guide 34 slidably via the bushing 40. A portion of the main piston rod 74 that is closer to a head portion 74b extends through the opening 12a of the cylindrical tube 12 to the outside. A head portion 76a of the auxiliary piston rod 76 is inside the air chamber 56. The head portion 76a has a hexagonal hole 80 in order to thread in the auxiliary piston rod 76 at a time of assembly.

A pressurizer 82 is provided on a surface of the second rod guide 34 which faces toward the opening 12b.

The pressurizer 82 has a slider 84 and a solid spring 86, and constantly pressurizes the hydraulic fluid AO in the first oil chamber 52 and the second oil chamber 54.

The slider 84 is capable of holing an end (upper end) of the solid spring 86, and is formed substantially as a hollow cylinder having its both ends open. The slider 84 is fitted to be axially slidable inside the cylindrical tube 12. An end surface (upper end surface) of the slider 84 which faces the second rod guide 34 is arranged to be perpendicular or substantially perpendicular to the axis AC. This end surface makes surface-to-surface contact with the end surface (lower surface) of the second rod guide 34. The solid spring 86 is provided by a coil spring made of a metal or a resin, for example. The solid spring 86 is disposed axially in the direction of the axis AC inside the air chamber 56 of the cylindrical tube 12 so that its end (upper end) is housed in the slider 84 and the other end (lower end) contacts the lid member 44.

The solid spring 86, or the pressurizer 82 in a wider sense, urges the second rod guide 34 toward the first rod guide 14, thereby constantly pressurizing the hydraulic fluid AO inside the first oil chamber 52 and the second oil chamber 54. This prevents a problem of cavitation in the hydraulic fluid AO caused by a negative pressure inside the first oil chamber 52 and the second oil chamber. The negative pressure is likely to develop during operation of the hydraulic damper 10 or when there is a volume change in the hydraulic fluid AO due to temperature changes. The above arrangement therefore maintains a good damping force characteristic of the hydraulic damper 10.

An end surface of the solid spring 86 that faces the second rod guide 34 may become slightly tilted with respect to a plane which is perpendicular to the axis AC when the solid spring 86 is in its free state. However, this end surface of the solid spring 86 is housed in the slider 84. This arrangement prevents such a problem that the tilted end surface of the solid spring 86 causes the second rod guide 34 which has surface-to-surface contact with the slider 84 to be tilted against the axis AC. As a result, it becomes possible to ensure smooth sliding operation of the second rod guide 34 with respect to the cylindrical tube 12.

The hydraulic damper 10 is capable of performing a stretching action in which the piston 50 slides in Direction A with respect to the cylindrical tube 12 and a compressing action in which the piston 50 slides in Direction B with respect to the cylindrical tube 12.

Referring to Fig. 4, the hydraulic damper 10 includes a stretch-side damping force generator 88 and a compression-side damping force generator 90.

The damping force generator 88 generates a damping force when the hydraulic damper 10 performs a stretching action, causing the hydraulic fluid AO to flow from the first oil chamber 52 toward the second oil chamber 54. The damping force generator 88 includes a plurality of stretch-side oil passages 92 formed in the piston 50 for mutual communication between the first oil chamber 52 and the second oil chamber 54; and the damping valve 66 provided by a leaf valve capable of elastically opening/closing an open end of each oil passage 92 opening to the second oil chamber 54.

On the other hand, the damping force generator 90 generates a damping force when the hydraulic damper 10 performs a compressing action, causing the hydraulic fluid AO to flow from the second oil chamber 54 toward the first oil chamber 52. The damping force generator 90 includes a plurality of compression-side oil passages 94 formed in the piston 50 for mutual communication between the first oil chamber 52 and the second oil chamber 54; and a damping valve 58 provided by a leaf valve capable of elastically opening/closing an open end of each oil passage 94 opening to the first oil chamber 52.

The main piston rod 74 is formed with a hole portion 96 from the head portion 74b to near the tip portion 74a. On a side surface of the main piston rod 74 which is corresponding to the hole portion 96, a plurality of through-holes 98 and a plurality of through-holes 100 are provided. Under a state where the main piston rod 74 is assembled to the piston 50, the through-holes 98 are slightly closer to the opening 12a than is the stopper 64, whereas the through-holes 100 are within the piston 50. The compression-side oil passages 94 have branching passages 94a for making communication between the through-holes 100 and the second oil chamber 54. A hollow cylindrical member 102 is provided inside the hole portion 96 of the main piston rod 74. The member 102 is disposed between the piston 50 and the through-holes 98, with the hollow portion of the member 102 serving as an oil passage 104. Further, inside the hole portion 96 of the main piston rod 74, there is fitted an adjustment valve 106, provided by a needle valve, for example, for adjustment of a degree of opening in the oil passage 104. An operation rod 108 is inserted thereon, and then a plug-shaped operation section 110 is threaded therein. The operation section 110 is threaded into the head portion 74b of the main piston rod 74, and is engageable with a tool (not illustrated). Operating the operation section 110 with the tool causes the adjustment valve 106 to move up and down via the operation rod 108, making it possible to adjust the degree of opening in the oil passage 104. These elements constitute an assisting damping force generator which assists the stretch-side damping force generator 88 and the compression-side damping force generator 90.

The stretch-side damping force generator 88 functions when, for example, the wheel 3 passes a concave portion of a road, i.e., when an urging force from the suspension spring 5 (to be described later) has moved the piston 50 in Direction A, causing the hydraulic damper 10 to perform a stretching action. In this case, the hydraulic fluid AO in the first oil chamber 52 flows through the oil passages 92 toward the second oil chamber 54. As the hydraulic pressure of the hydraulic fluid AO in the first oil chamber 52 becomes greater than an elastic urging force of the damping valve 66, the damping valve 66 experiences elastic deformation so as to open. Then, the hydraulic fluid AO flows through the open oil passages 92 under an elastic resistance from the damping valve 66. This flow of hydraulic fluid AO generates a damping force which buffers the impact force.

On the other hand, the compression-side damping force generator 90 functions when, for example, the wheel 3 passes a convex portion of a road, i.e., when the urging force from the suspension spring 5 is overcome by the piston 50 which has moved in Direction B, causing the hydraulic damper 10 to perform a compressing action. In this case, the hydraulic fluid AO in the second oil chamber 54 flows through the oil passages 94 toward the first oil chamber 52. As the hydraulic pressure of the hydraulic fluid AO in the second oil chamber 54 becomes greater than an elastic urging force of the damping valve 58, the damping valve 58 experiences elastic deformation so as to open. Then, the hydraulic fluid AO flows through the open oil passages 94 under an elastic resistance from the damping valve 58. This flow of hydraulic fluid AO generates a damping force which buffers the impact force.

When the hydraulic damper 10 performs a stretching action or a compressing action, the assisting damping force generator works also. In this working process, there is a flow of hydraulic fluid AO between the first oil chamber 52 and the second oil chamber 54, through the through-holes 98, the oil passage 104, the hole portion 96, the through-holes 100 and the branching passages 94a. It should be noted here that as a previous step, a setting operation is performed by moving the operation section 110 thereby adjusting the adjustment valve 106 to set the degree of opening in the oil passage 104. Then, as the hydraulic fluid AO flows through the adjusted oil passage 104, a desired damping force is generated to buffer the impact force. Through the adjustment to the adjustment valve 106 as described above, it is possible to adjust the damping force, which is generated by the hydraulic damper 10 when it performs a stretching action or a compressing action, to a desired level.

In the hydraulic damper 10 as has been described, the head portion 74b of the main piston rod 74 is connected with the damper application target, i.e., the car body 2 of the automobile 1, via the rubber mount 6. Specifically, the rubber mount 6 includes an elastic member 112 made of rubber; and a pair of support members 114, 116 made of metal plates which sandwich the elastic member 112. The support members 114, 116 are baked, for example, to the elastic member 112. The support member 114 is fixed to the car body 2 by a fastener 118, for example. On the other hand, the support member 116 is secured to near the head portion 74b of the main piston rod 74. The support member 116 is sandwiched between collars 120, 122 and a collar 124, and tightened by a nut 126 which is threaded around the head portion 74b.

On the second end side of the cylindrical tube 12, the connecting member 46 is supported by a supporting member 132 pivotably with respect to the wheel suspension arm 3a, via a damping member 128 and a support pipe 130. The supporting member 132 includes a bolt 134 which is inserted into the support pipe 130 to connect the support pipe 130 and the wheel suspension arm 3a with each other; and a nut 136 threaded around the bolt 134. The damping member 128 is baked for example, to the connecting member 46 and to the support pipe 130. The supporting member 132 as described connects the second end of the cylindrical tube 12 to the wheel 3 side.

The cylindrical tube 12 is provided with the suspension spring 5 which urges the hydraulic damper 10 for stretching action. The suspension spring 5 may preferably be defined by a coil spring, for example, and is disposed coaxially with the axis AC, to cover the first end side (the side on the opening 12a) of the cylindrical tube 12 and the main piston rod 74. The suspension spring 5 is supported by a spring bearing 138 fitted around the cylindrical tube 12, and a spring bearing 190 provided on a lower surface of the support member 114. The suspension spring 5 is provided between the two spring bearings 138, 140 so that it assumes an axially and elastically compressed state when the automobile 1 is in a stopped state. The axial location of the spring bearing 138 on the cylindrical tube 12 is adjustable by using a circlip 141.

In the hydraulic damper 10 as described above, attention should be paid to an arrangement that the main piston rod 74 has a diameter D1 and the auxiliary piston rod 76 has a diameter D2, and these two diameters are different from each other.

As will be understood from Fig. 4, the present preferred embodiment uses a relationship expressed as D1>D2. The diameter D1 of the main piston rod 74 preferably is about 16 mm whereas the diameter D2 of the auxiliary piston rod 76 preferably is about 14 mm, for example.

With the above arrangement, the piston 50 has two axial end surfaces, each of which has a pressure receiving surface which receives pressure from the hydraulic fluid AO. Since there is a piston rod which extends out of each end surface of the piston 50, the area of pressure receiving surface is obtained by subtracting the cross-sectional area of the piston rod from the relevant area of the end surface of the piston 50. Since the main piston rod 74 and the auxiliary piston rod 76 extending from the piston 50 have different diameters D1, D2 from each other, the two pressure receiving surfaces which receive the pressure of the hydraulic fluid AO have different areas from each other. Specifically, in the two end surfaces of the piston 50, the area of pressure receiving surface of the end surface where the main piston rod 74 extends is smaller than that of the end surface where the auxiliary piston rod 76 extends. With this arrangement, there is always a gap provided between the oil passage 104 and the adjustment valve 106, whereby the hydraulic fluid AO inside the first oil chamber 52 and the second oil chamber 54 is always pressurized by the solid spring 86 of the pressurizer 82 via the second rod guide 34.

Hence, based on the pressure of the hydraulic fluid AO due to the compressing action by the solid spring 86 of the pressurizer 82, and the area difference between the two pressure receiving surfaces of the piston 50, an "urging force" F comes into existence. The "urging force" F causes the piston 50 to axially urge the cylindrical tube 12 toward the first oil chamber 52 (the main piston rod 74) (in Direction A). Thus, the hydraulic damper 10 has the "characteristic" that it is always enabled to stretch in its free state. Since the hydraulic damper 10 has the "characteristic" that it is always enabled to stretch, an initial load is applied to the rubber mount 6 which represents the location of connection between the automobile 1 and the hydraulic damper 10.

According to the hydraulic damper 10 as described, the advantages described below are obtained.

Typically, when the automobile 1 is driven, a large impact force is applied repeatedly from the road-surface side toward the car body 2. Upon the application of each impact force, the hydraulic damper 10 performs a compressing action and buffers the impact force.

In other words, since the hydraulic damper 10 has the "characteristic" that it is always enabled to stretch in its free state, the rubber mount 6 is under an initial load already in its resting state, which means that the rubber mount 6 has already undergone its initial deformation (stretching). Therefore, when an impact force is applied from the road-surface side toward the car body 2, the hydraulic damper 10 immediately performs a compressing action. As a result, the impact force which is applied toward the car body 2 is buffered by the damper 10 very quickly and highly responsively.

As shown in Fig. 2 and Fig. 3, the automobile 1 is also provided with car-body vibration dampers 7.

The car-body vibration damper 7 is a device which suppresses small vibrations (for example, vibrations of a stroke not longer than 1 mm) which are developing on the car body 2 based on impact forces applied by the road-surface side toward the car body 2 while the automobile 1 is being driven. The car-body vibration damper 7 is constituted by the hydraulic damper 10. The car-body vibration damper 7, i.e., the hydraulic damper 10, is disposed horizontally between left and right suspension towers 8a, 8b which represent two portions of the car body 2. In other words, the cylindrical tube 12 and the main piston rod 74 of the hydraulic damper 10 are connected directly with the respective right and left suspension towers 8a, 8b via respective support rods 9a, 9b, without rubber mounts disposed in between.

According to the car-body vibration damper 7, small vibrations which are developing on the car body 2 based on impact forces applied by the road-surface side while the automobile 1 is being driven is also buffered highly responsively using the same working principle as described above, and therefore it is possible to provide a comfortable ride.

It should be noted here that the car-body vibration damper 7, i.e., the hydraulic damper 10, may be bridged between any two portions of the automobile 1, such as the right and left suspension towers 8a, 8b; mutually opposing right and left walls of a rear trunk which represents two sides of the car body 2; and two points each used for pivotally supporting the wheel suspension arm 3a near the car body 2.

As has been described above, in the hydraulic damper 10 which is applied to the suspension system 4 and the car-body vibration damper 7, the spring constant of the solid spring 86 included in the pressurizer 82 is not noticeably influenced by temperature changes. Therefore, use of the solid spring 86 in the pressurizer 82 makes it possible to reliably maintain a desirable "characteristic" of the hydraulic damper 10 even if there are temperature changes in the hydraulic damper 10 itself or in the surrounding environment.

Also, the above-described advantages in the hydraulic damper 10 are obtained from a simple constitution that the main piston rod 74 has a diameter D1 and the auxiliary piston rod 76 has a diameter D2, which have a simple relationship of (D1>D2), without any need for adding extra components such as a spring.

Further, damper design specifications may be made in the order of firstly the diameter D1 of the main piston rod 74, secondly the pressing force of the pressurizer 82, and thirdly the diameter D2 of the auxiliary piston rod 76. This is an easy way for achieving a good balance between an appropriate urging force, an appropriate pressurizing force for prevention of cavitation and an appropriate diameter of the piston rod.

Hereinafter, the description will cover other preferred embodiments of the present invention.

Each of the preferred embodiments to be described hereinafter is preferably substantially the same as the previous preferred embodiment in many aspects of their configuration and functions/advantages they offer. Thus, the description of the differences will be provided. Throughout the drawings, common elements and components are indicated by the same reference symbols and their description will not be repeated hereinafter. It should be noted here that individual arrangements in any of the preferred embodiments may be combined in various ways in consideration of the functions, benefits and advantages of the present invention.

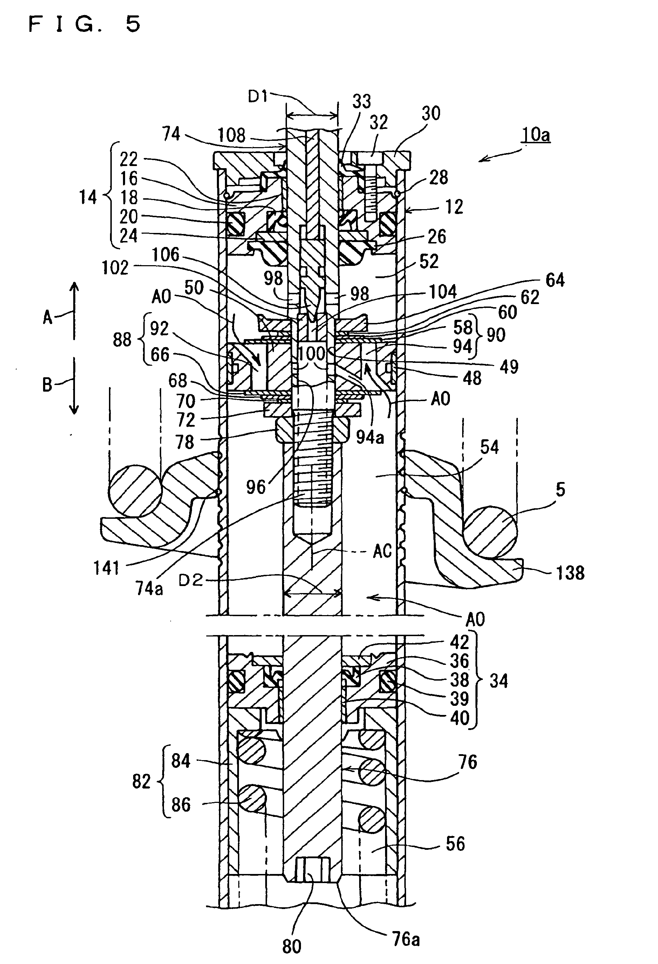

Referring to Fig. 5, a hydraulic damper 10a according to one of these other preferred embodiments of the present invention will be described.

In the hydraulic damper 10a, the auxiliary piston rod 76 has a greater diameter D2 than the diameter D1 of the main piston rod 74 (D2>D1). For example, the diameter D2 of the auxiliary piston rod 76 preferably is about 16 mm whereas the diameter D1 of the main piston rod 74 preferably is about 14 mm.

In this case, in the piston 50, the area of pressure receiving surface where the auxiliary piston rod 76 extends is smaller than the area of pressure receiving surface where the main piston rod 74 extends according to the diametric difference that the diameter D2 of the auxiliary piston rod 76 is greater than the diameter D1 of the main piston rod 74. Therefore, the piston 50 is urged toward the side equipped with the auxiliary piston rod 76 (in Direction B) by an "urging force" F which is based on the pressure of the hydraulic fluid AO and an area difference between the two pressure receiving surfaces. Thus, the hydraulic damper 10 has the "characteristic" that it is always enabled to compress in its free state. Since the hydraulic damper 10 has the "characteristic" that it is always enabled to compress, an initial load is applied to the rubber mount 6 which represents the location of connection between the automobile 1 and the hydraulic damper 10. As a result, the rubber mount 6 is under the initial load already in its resting state, which means that the rubber mount 6 has already undergone its initial deformation (compression).

Therefore, while the automobile 1 is being driven and when the automobile 1 comes to a sharp curve and the car body 2 starts to tilt rapidly in the radially outward direction with respect to the turning direction, the hydraulic damper 10 on the radially inward side immediately starts a stretching action, thereby generating a damping force highly responsively, making it possible to suppress a floating movement of the car body 2 which is developing on the radially inward side of the turning direction. On the other hand, on the radially outward side of the turning direction of the automobile 1, the rubber mount 6 is stretched by the amount of the initial deformation (compression), and then performs deformation (stretching), making it easy for the car body 2 to perform a sinking action on the radially outward side of the turning direction. As a result, it becomes possible to keep a low roll angle and a low height (attitude) of the car body 2 at the time of turning, making it possible to drive smoothly even in a sharp curve.

The hydraulic damper 10 may also be bridged at portions of the car body 2 of the automobile 1 which are prone to car body vibrations caused by external tensile forces. In this case, small vibrations occurring in the car body 2 due to relevant impact forces are also buffered highly responsively based on the same working principle as described above and therefore it is possible to provide a comfortable ride.

Further, since the hydraulic damper 10 has the "characteristic" that it is always enabled to compress in its free state, it has a compact outer shape in its free state. Therefore, it is easy to handle the hydraulic damper 10 when it is transported, stored, etc.

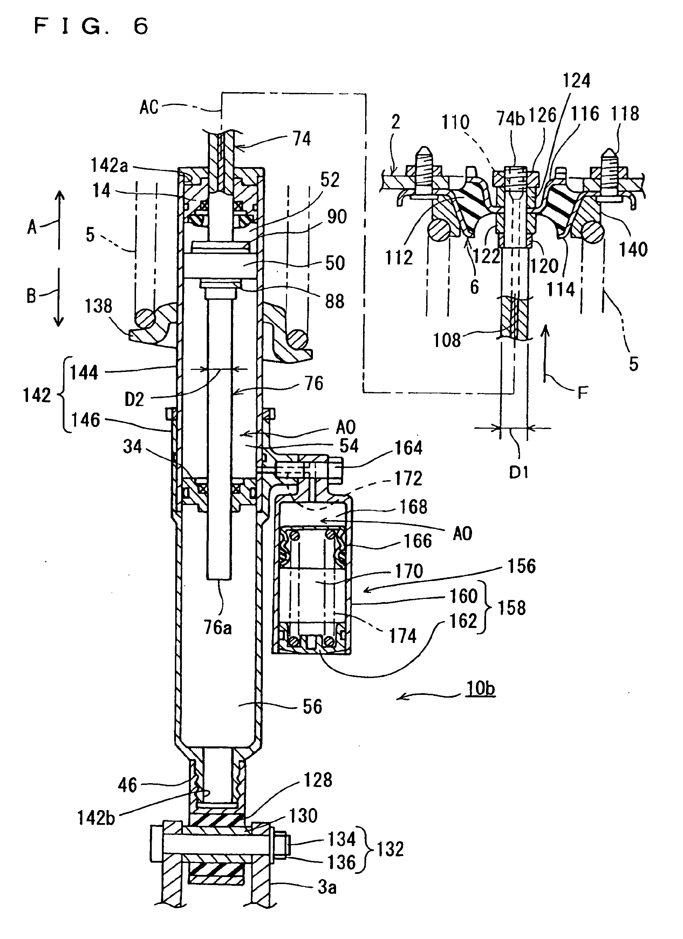

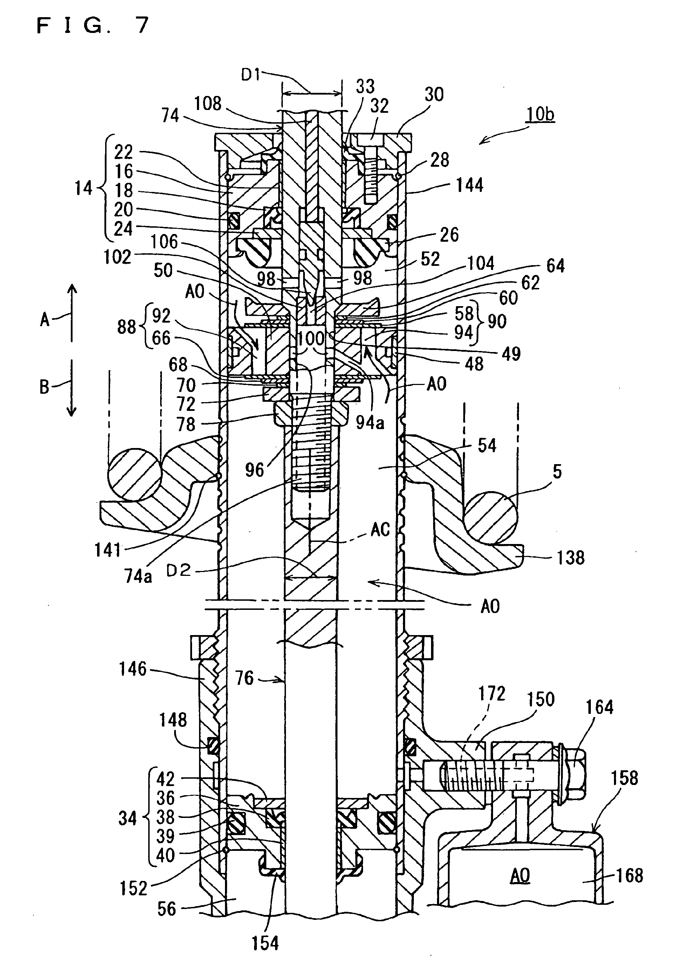

Now, reference will be made to Fig. 6 and Fig. 7 to describe a hydraulic damper 10b according to still another preferred embodiment of the present invention.

The hydraulic damper 10b includes a cylindrical tube 142. The cylindrical tube 142 has a first section 144, and a second section 146 assembled to the first section 144, and has two openings 142a, 142b on its two respective ends. A sealing member 148 is located where the first section 144 and the second section 146 are connected with each other.

The second section 146 has a mount 150 formed integrally therewith by casting, for example, on its side wall near an end, for attaching a pressure reservoir 158 (to be described later). An end of the second section 146 which has the opening 142b preferably has the same shape as that of the lid member 44 in the previous preferred embodiment.

The second rod guide 34 functions as a fixed rod guide. The second rod guide 34 is fixed by a circlip 152 to an axially and substantially center portion inside the cylindrical tube 142, i.e., at an end portion of the first section 144 near the opening 142b. The second rod guide 34 has a surface facing toward the opening 142b where a sealing member 154 is attached.

The main piston rod 74 has a diameter D1 which is greater than a diameter D2 of the auxiliary piston rod 76.

The hydraulic damper 10b has a pressurizer 156, which preferably has the following structure.

The pressurizer 156 preferably includes a pressure reservoir 158 which is provided along the cylindrical tube 14. The pressure reservoir 158 includes a pressure reservoir main body 160 and a bottom member 162 which closes a bottom opening of the pressure reservoir main body 160, and has a substantially cylindrical shape with two axial ends closed. The pressure reservoir 158 is attached on the mount 150 in the second section 146 of the cylindrical tube 142, using a bolt 164, for example.

A free piston 166 is fitted axially slidably into the pressure reservoir 158. The free piston 166 partitions an inside space of the pressure reservoir 158 into an airtight oil chamber 168 and an airtight air chamber 170. It should be noted here that the air chamber 170 may communicate with the atmospheric environment.

The oil chamber 168 in the pressure reservoir 158 communicates with the second oil chamber 54 in the cylindrical tube 142 via an oil passage 172 formed in the bolt 164. The oil chamber 168 is filled with hydraulic fluid AO. A solid spring 174 is provided inside the air chamber 170. The solid spring 174 urges the free piston 166 toward the oil chamber 168, thereby constantly pressurizing the hydraulic fluid AO.

According to the hydraulic damper 10b, the pressurizer 156 includes a solid spring 174. The spring constant of the solid spring 174 is not noticeably influenced by temperature changes. Therefore, use of the solid spring 174 in the pressurizer 156 makes it possible to reliably maintain a desirable "characteristic" of the hydraulic damper 10b even if there are temperature changes in the hydraulic damper 10b itself or in the surrounding environment.

Also, according to the hydraulic damper 10b, the diametric difference between the main piston rod 74 and the auxiliary piston rod 76 does not cause a large amount of flow of the hydraulic fluid AO between the cylindrical tube 142 and the pressure reservoir 158, so a required capacity of the pressure reservoir 158 is small.

It should be noted here that in the present preferred embodiment, the diameter D2 of the auxiliary piston rod 76 may be greater than the diameter D1 of the main piston rod 74.

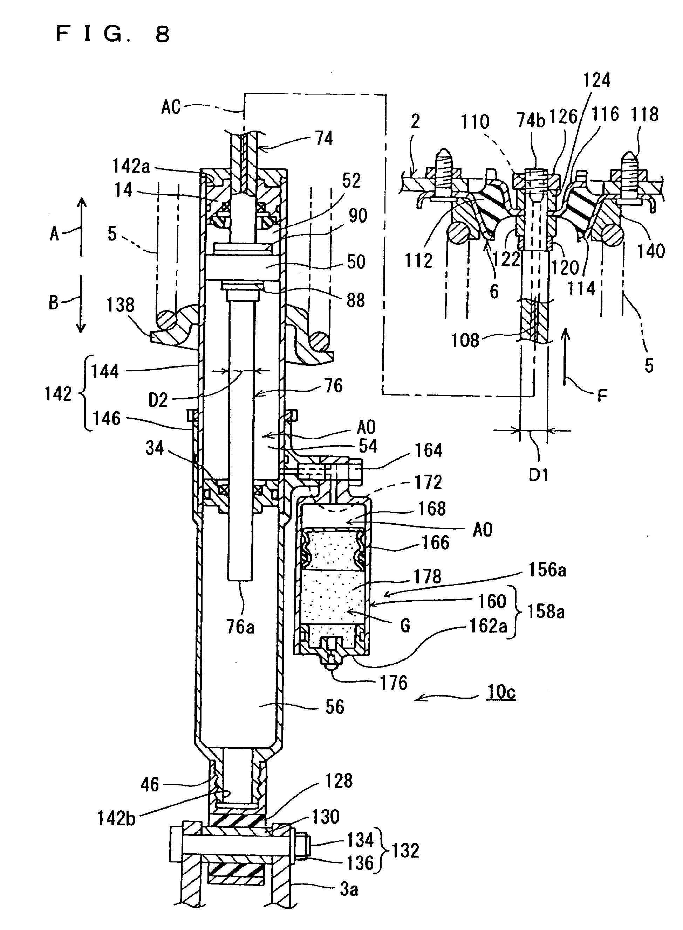

Next, reference will be made to Fig. 8 to describe a hydraulic damper 10c according to still another preferred embodiment of the present invention.

The hydraulic damper 10c includes a pressurizer 156a. The pressurizer 156a includes a pressure reservoir 158a which has a pressure reservoir main body 160 and a bottom member 162a which closes a bottom opening of the pressure reservoir main body 160. The bottom member 162a has a gas charging port 176 arranged to charge the pressure reservoir 158a with a gas G. An inside of the pressure reservoir 158a is partitioned by a free piston 166 into an airtight oil chamber 168 and an airtight gas chamber 178. The gas chamber 178 is filled with the gas G at a high pressure. The gas G urges the free piston 166 toward the oil chamber 168, thereby constantly pressurizing the hydraulic fluid AO in each of the oil chambers 52, 54 and 168. The gas G is provided by, for example, highly pressurized (approximately 2 MPa) nitrogen gas. The gas G can be charged into the gas chamber 178 at a desired pressure, via the gas charging port 176 of the bottom member 162a.

In the present preferred embodiment, the diameter D1 of the main piston rod 74 and the diameter D2 of the auxiliary piston rod 76 may be either of D1>D2 and D2>D1.

Now, changing the pressure of the gas G in the hydraulic damper 10c is easier than changing the spring constant of the solid spring 174 in a configuration where the pressurizer uses the solid spring 174. Therefore, it is easy to adjust the "characteristic" of the hydraulic damper 10c to a desired level by changing the pressure of the gas G, and use of the pressurizer 156a which includes a highly pressurized gas G improves convenience.

The hydraulic damper 10 may be used upside down, or may be installed in a tilted manner. The damping force generator may be provided outside the cylindrical tube rather than inside the piston, and connection with the inside of the cylindrical tube may be provided via a bypass pipe. Also, the cylindrical tube may have a thick side wall, and the damping force generator may be formed in the thick side wall. Connection between the hydraulic damper 10 and a damper application target may be provided by a pivotable supporting member, a ball joint, etc.

The present invention is applicable to any vehicles, in addition to the automobile 1.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A hydraulic damper (10) comprising:
a cylindrical tube (12);
a first rod guide (14) fitted into the cylindrical tube (12), on a side closer to a first end of the cylindrical tube;
a second rod guide (24) fitted into the cylindrical tube (12), on a side closer to a second end of the cylindrical tube (12) than is the first rod guide (14);
a piston (50) fitted into the cylindrical tube (12) so as to be axially slidable therein between the first rod guide (14) and the second rod guide (34), and so as to partition a space between the first rod guide (14) and the second rod guide (34) into a first oil chamber (52) and a second oil chamber (54);
a main piston rod (74) extending from the piston (50) and penetrating the first rod guide (14);
an auxiliary piston rod (76) extending from the piston (50) and penetrating the second rod guide (34);
a pressurizer (82) arranged to pressurize a hydraulic fluid (A0) filled in the first oil chamber (52) and the second oil chamber (54); and
a damping force generator (88) arranged to generate a damping force by allowing the hydraulic fluid (A0) to flow between the first oil chamber (52) and the second oil chamber (54); **characterised in that**
a diameter (01) of the main piston rod (74) and a diameter (02) of the auxiliary piston rod (76) are different from each other.

2. The hydraulic damper according to Claim 1, wherein a diameter (01) of the main piston rod (74) is greater than a diameter (02) of the auxiliary piston rod (76).

3. The hydraulic damper according to Claim 1, wherein a diameter (02) of the auxiliary piston rod (76) is greater than a diameter (01) of the main piston rod (74).

4. The hydraulic damper according to Claim 1, wherein the pressurizer (82) includes a solid spring (86).

5. The hydraulic damper according to Claim 1, wherein the pressurizer (82) includes a high pressure gas.

6. A vehicle comprising the hydraulic damper according to Claim 1.

## Patentansprüche

1. Ein Hydraulikdämpfer (10), der folgende Merkmale aufweist:
ein zylindrisches Rohr (12);
eine erste in das zylindrische Rohr (12) eingepasste Stabführung (14), auf einer Seite, die näher bei einem ersten Ende des zylindrischen Rohrs liegt;
eine zweite in das zylindrische Rohr (12) eingepasste Stabführung (34), auf einer Seite, die näher bei einem zweiten Ende des zylindrischen Rohrs (12) liegt als die erste Stabführung (14);
einen Kolben (50), der dahin gehend in das zylindrische Rohr (12) eingepasst ist, in denselben zwischen der ersten Stabführung (14) und der zweiten Stabführung (34) axial verschiebbar zu sein und einen Raum zwischen der ersten Stabführung (14) und der zweiten Stabführung (34) in eine erste Ölkammer (52) und eine zweite Ölkammer (54) zu unterteilen;
eine Hauptkolbenstange (74), die sich von dem Kolben (50) weg erstreckt und in die erste Stabführung (14) eindringt;
eine Hilfskolbenstange (76), die sich von dem Kolben (50) weg erstreckt und in die zweite Stabführung (34) eindringt;
einen Druckhalter (82), der dazu angeordnet ist, eine in die erste Ölkammer (52) und die zweite Ölkammer (54) eingefüllte Hydraulikflüssigkeit (A0) mit Druck zu beaufschlagen; und
eine Dämpfungskrafterzeugungseinrichtung (88), die dazu angeordnet ist, eine Dämpfungskraft zu erzeugen, indem sie ermöglicht, dass die Hydraulikflüssigkeit (A0) zwischen der ersten Ölkammer (52) und der zweiten Ölkammer (54) fließt;
**dadurch gekennzeichnet, dass**
ein Durchmesser (01) der Hauptkolbenstange (74) und ein Durchmesser (02) der Hilfskolbenstange (76) voneinander verschieden sind.

2. Der Hydraulikdämpfer gemäß Anspruch 1, bei dem ein Durchmesser (01) der Hauptkolbenstange (74) größer ist als ein Durchmesser (02) der Hilfskolbenstange (76).

3. Der Hydraulikdämpfer gemäß Anspruch 1, bei dem ein Durchmesser (02) der Hilfskolbenstange (76) größer ist als ein Durchmesser (01) der Hauptkolbenstange (74).

4. Der Hydraulikdämpfer gemäß Anspruch 1, bei dem der Druckhalter (82) eine massive Feder (86) umfasst.

5. Der Hydraulikdämpfer gemäß Anspruch 1, bei dem der Druckhalter (82) ein Hochdruckgas umfasst.

6. Ein Fahrzeug, das den Hydraulikdämpfer gemäß Anspruch 1 aufweist.

## Revendications

1. Amortisseur hydraulique (10), comprenant:
un tube cylindrique (12);
un premier guide-tige (14) monté dans le tube cylindrique (12), d'un côté plus proche d'une première extrémité du tube cylindrique;
un deuxième guide-tige (34) monté dans le tube cylindrique (12), d'un côté plus proche d'une deuxième extrémité du tube cylindrique (12) que le premier guide-tige (14);
un piston (50) monté dans le tube cylindrique (12) de manière à pouvoir y coulisser axialement entre le premier guide-tige (14) et le deuxième guide-tige (34) et de manière à diviser un espace entre le premier guide-tige (14) et le deuxième guide-tige (34) en une première chambre à huile (52) et une deuxième chambre à huile (54);
une tige de piston principale (74) s'étendant à partir du piston (50) et pénétrant dans le premier guide-tige (14);
une tige de piston auxiliaire (76) s'étendant à partir du piston (50) et pénétrant dans le deuxième guide-tige (34);
un pressuriseur (82) disposé de manière à mettre sous pression un fluide hydraulique (AO) rempli dans la première chambre à huile (52) et la deuxième chambre à huile (54); et
un générateur de force d'amortissement (88) disposé de manière à générer une force d'amortissement en permettant que le fluide hydraulique (AO) circule entre la première chambre à huile (52) et la deuxième chambre à huile (54);
**caractérisé par le fait que**
un diamètre (01) de la tige de piston principal (74) et un diamètre (02) de la tige de piston auxiliaire (76) sont différents l'un de l'autre.

2. Amortisseur hydraulique selon la revendication 1, dans lequel un diamètre (01) de la tige de piston principal (74) est supérieur à un diamètre (02) de la tige de piston auxiliaire (76).

3. Amortisseur hydraulique selon la revendication 1, dans lequel un diamètre (02) de la tige de piston auxiliaire (76) est supérieur à un diamètre (01) de la tige de piston principal (74).

4. Amortisseur hydraulique selon la revendication 1, dans lequel le pressuriseur (82) comporte un ressort massif (86).

5. Amortisseur hydraulique selon la revendication 1, dans lequel le pressuriseur (82) comporte un gaz haute pression.

6. Véhicule comprenant l'amortisseur hydraulique selon la revendication 1.
